(19) **Europäisches Patentamt / European Patent Office / Office européen des brevets**

(11) **EP 3 386 191 B1**

(12) **FASCICULE DE BREVET EUROPEEN**

(45) Date de publication et mention
de la délivrance du brevet:
**31.07.2019 Bulletin 2019/31**

(51) Int Cl.:
*H04N 5/378* (2011.01)     *H04N 5/3745* (2011.01)
*H04L 1/12* (2006.01)     *H04N 5/374* (2011.01)

(21) Numéro de dépôt: **18164285.1**

(22) Date de dépôt: **27.03.2018**

(54) **CAPTEUR MATRICIEL A CODAGE TEMPOREL SANS ARBITRAGE**

ARRAY-SENSOR MIT ZEITKODIERUNG OHNE ARBITRIERUNG

ARRAY SENSOR WITH TIME CODING WITHOUT ARBITRATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.04.2017 FR 1753032**

(43) Date de publication de la demande:
**10.10.2018 Bulletin 2018/41**

(73) Titulaire: **Commissariat à l'Energie Atomique et
aux Energies
Alternatives
75015 Paris (FR)**

(72) Inventeurs:
• **DUPOIRON, Camille
38000 GRENOBLE (FR)**
• **SICARD, Gilles
38920 CROLLES (FR)**
• **VERDANT, Arnaud
38330 SAINT-NAZAIRE LES EYMES (FR)**

(74) Mandataire: **Priori, Enrico et al
Marks & Clerk France
Immeuble "Visium"
22, avenue Aristide Briand
94117 Arcueil Cedex (FR)**

(56) Documents cités:
**WO-A1-2014/174498     FR-A1- 3 035 759
US-A1- 2005 273 661     US-A1- 2010 182 468
US-B1- 6 253 161**

• **NICOLA MASSARI ET AL: "A collision-free
time-to-first spike camera architecture based on
a winner-take-all network", CIRCUIT THEORY
AND DESIGN, 2007. ECCTD 2007. 18TH
EUROPEAN CONFERENCE ON, IEEE,
PISCATAWAY, NJ, USA, 27 août 2007
(2007-08-27), pages 950-953, XP031257906, ISBN:
978-1-4244-1341-6**

**EP 3 386 191 B1**

## Description

L'invention porte sur un capteur matriciel, tel qu'un capteur d'images, du type à codage temporel. Plus particulièrement, elle porte sur un capteur à codage temporel présentant une faible consommation et, de préférence, une faible complexité matérielle. Elle se prête particulièrement bien à une réalisation en technologie CMOS, notamment très miniaturisée (dimensions critiques inférieures à 50 nm, par exemple de l'ordre de 28 nm ; on parle de « technologie avancée »). Elle est principalement destinée à des applications de type « vision artificielle » (« *machine vision* » en anglais).

Les capteurs d'images CMOS conventionnels sont généralement du type dit « à pixels actifs » (APS, pour « active pixel sensor »), dans lesquels chaque pixel comprend un photodétecteur, une capacité d'intégration et un circuit de lecture. La capacité d'intégration est chargée à une valeur de tension d'initialisation, puis elle se décharge à travers le photodétecteur à une vitesse qui dépend de l'intensité lumineuse incidente sur ce dernier (de manière équivalente, on peut considérer que la capacité intègre les charges photo-générées). La tension aux bornes de la capacité d'intégration est lue après un temps déterminé, ce qui permet de déterminer ladite intensité lumineuse, puis le pixel est réinitialisé. Dans les architectures dites à pixels numériques, chaque pixel comprend en outre un convertisseur analogique-numérique et une mémoire, et fournit donc à sa sortie un signal numérique représentatif de l'intensité lumineuse à laquelle il a été exposé. Dans ces architectures, tous les pixels sont lus à une cadence d'acquisition d'images prédéfinie. Cela entraine une consommation énergétique importante qui est préjudiciable pour certaines applications, par exemple dans le cas de capteur énergétiquement autonomes.

Une approche différente est celle des capteurs à codage temporel (on parle également de capteurs basés sur des évènements - « event-based » en anglais). Dans ce type d'imageur, chaque pixel intègre les charges générées par son photodétecteur jusqu'à ce que sa tension atteigne un seuil ; quand cette condition est vérifiée, il envoie un signal permettant de l'identifier (son adresse) ; on dit généralement qu'il « lève un drapeau ». L'intensité lumineuse incidente sur le pixel est déterminée en mesurant le temps qui s'est écoulé entre l'initialisation de la capacité d'intégration et l'instant où le drapeau a été levé. Dans d'autres types de capteurs à codage temporel, la condition qui détermine la levée du drapeau peut ne pas être le franchissement d'un seuil mais un autre événement, par exemple une différence par rapport à la valeur de tension d'un autre pixel, à une valeur de tension mesurée en précédence, etc. Dans tous les cas, la lecture des pixels se fait de manière asynchrone. A titre d'exemple, le document US 2005/273661 divulgue un capteur matriciel à codage temporel.

Dans les capteurs à codage temporel, la lecture asynchrone des pixels entraine un risque de collision car plusieurs pixels peuvent essayer de transmettre leur adresse en même temps sur un même bus de communication. Typiquement, ce problème est résolu par un mécanisme d'arbitrage, par exemple mis en oeuvre par le protocole AER (de l'anglais « Adress Event Représentation », c'est-à-dire représentation d'événements par leur adresse et au temps où elle a été transmise), nécessitant des échanges de requêtes et acquittements (« handshaking »). L'utilisation d'un arbitre complexifie la structure du capteur, ce qui a un coût en termes de surface de silicium occupée, et augmente sensiblement sa consommation énergétique.

Le document FR 3 035 759 décrit un capteur d'images à codage temporel dans lequel des redondances sont évitées grâce à un mécanisme d'inhibition des pixels proches d'un pixel ayant levé le drapeau, et les collisions des événements restants sont évitées par le protocole AER.

L'article de J. A. Leñero-Bardallo, R. Carmona-Galán et Á. Rodríguez-Vázquez « A high dynamic range image sensor with linear response based on asynchronous event detection », 2015 European Conférence on Circuit Theory and Design, décrit un capteur d'images combinant une lecture asynchrone, basée sur des événements, et une lecture analogique conventionnelle. L'intensité lumineuse associée à un pixel est déterminée à partir du nombre d'événements générés dans un temps d'acquisition prédéterminé et du « résidu » représentant la tension aux bornes de l'intégrateur à la fin de ce temps d'acquisition. Cela permet d'augmenter la dynamique d'intensité lumineuse du capteur, mais un arbitre demeure nécessaire.

L'article de Z. Kalayjian et A. G. Andreou « Asynchronous Communication of 2D Motion Information Using Winner-Takes-All Arbitration », Analog Integrated Circuits and Signal Processing, 13, 103-109 (1997) décrit un capteur d'images à codage temporel utilisant un arbitrage de type WTA (« Winner Takes All », c'est-à-dire « le gagnant prend tout ») au lieu d'un protocole AER. Voir également l'article de N. Massari, S. Arsalan Jawed et M. Gottardi « A Collision-Free Time-to-First Spike Camera Architecture Based on a Winner-Take-All Network », 18th European Conférence on Circuit Theory and Design, 2007 (ECCTD 2007).

Dans tous les cas, un arbitrage est nécessaire, sous peine d'une sévère dégradation de la qualité des images acquises, à cause des collisions entre pixels essayant de transmettre simultanément leurs adresses.

L'invention vise à surmonter les inconvénients précités de l'art antérieur. Plus particulièrement, elle vise à réduire la consommation énergétique et/ou la complexité matérielle des capteurs d'image à codage temporel, sans pour autant sacrifier excessivement la qualité des images acquises. Conformément à l'invention, ce but est atteint en remplaçant l'arbitrage par un système de priorités fixes, associé à un mécanisme de comptage des réinitialisations qui permet d'éviter les pertes d'information en cas de conflit entre pixels.

Un objet de l'invention, permettant d'atteindre ce but, est un capteur matriciel comprenant une matrice d'éléments de détection agencés par lignes et par colonnes et un circuit de lecture pour chaque colonne, les éléments de détection d'une même colonne étant reliés au circuit de lecture correspondant par l'intermédiaire d'un bus, chaque élément de détection comprenant un capteur adapté pour générer un courant électrique ayant une intensité représentative d'une grandeur physique à détecter, un intégrateur de charge configuré pour accumuler des charges générées par ledit capteur, un comparateur configuré pour générer un signal de déclenchement lorsqu'un niveau de tension aux bornes de ce dernier atteint un niveau de seuil ainsi qu'un circuit logique d'accès au bus configuré pour recevoir en entrée ledit signal de déclenchement et, suite à la réception dudit signal, essayer de transmettre sur ledit bus une adresse dudit élément de détection dans la colonne, caractérisé en ce que les éléments de détection d'une même colonne ont des niveaux de priorité d'accès au bus différents, et en ce que ledit circuit logique d'accès au bus de chaque élément de détection est configuré pour : renoncer à transmettre ladite adresse et provoquer une réinitialisation de l'intégrateur de charge de l'élément de détection si le bus est préempté par un élément de détection de niveau de priorité supérieur ; compter le nombre d'essais effectués avant de pouvoir transmettre ladite adresse ; et communiquer ledit nombre audit circuit de lecture avec ladite adresse de l'élément de détection.

Selon des modes de réalisation particuliers d'un tel capteur matriciel :

-    Ledit bus peut comprendre une pluralité de bus élémentaires, le circuit logique d'accès au bus de chaque élément de détection étant configuré pour transmettre ladite adresse sur un bus élémentaire choisi en fonction du nombre d'essais qu'il a effectués avant de pouvoir transmettre l'adresse de l'élément de détection.
-    Chaque circuit logique d'accès au bus peut être configuré pour renoncer à transmettre l'adresse de l'élément de détection dès lors qu'un bus élémentaire dudit bus est préempté par un élément de détection de niveau de priorité supérieur.
-    Chaque dit circuit de lecture peut comprendre une pluralité de modules de lecture associés à des bus élémentaires respectifs et dans lequel chaque circuit logique d'accès au bus est configuré pour renoncer à transmettre l'adresse de l'élément de détection lorsque le bus élémentaire sur lequel il essaie d'effectuer la transmission est préempté par un élément de détection de niveau de priorité supérieur, et pour effectuer la transmission dans le cas contraire.
-    Chaque circuit logique d'accès au bus peut être configuré pour attendre que le bus soit disponible après avoir effectué un nombre maximal prédéterminé d'essais de transmission.
-    Ledit circuit de lecture peut être configuré pour déterminer un niveau d'intensité lumineuse reçu par un élément de détection ayant transmis son adresse à partir de l'instant auquel ladite adresse a été transmise et du nombre d'essais de transmission effectués.
-    Chaque circuit logique d'accès au bus peut être configuré pour commander l'extinction du capteur et du comparateur de l'élément de détection après avoir transmis son adresse, et pour commander sa réactivation à la fin d'une période de trame.
-    Chaque circuit logique d'accès au bus peut être configuré pour commander l'extinction du capteur et du comparateur de l'élément de détection après avoir effectué un essai de transmission de l'adresse dudit élément de détection en même temps, et après un même nombre d'essais, que l'élément de détection de niveau de priorité immédiatement supérieur.
-    Les niveaux de priorité des éléments de détection d'une colonne peuvent être prédéterminés. Plus particulièrement, les niveaux de priorité des éléments de détection d'une colonne peuvent correspondre à leur rang dans ladite colonne.
-    En variante, les niveaux de priorité des éléments de détection d'une colonne peuvent dépendre à la fois de leur rang dans ladite colonne et du nombre d'essais d'accès au bus déjà effectués.

Un autre objet de l'invention est un capteur d'images formé par un tel capteur matriciel dans lequel lesdits éléments de détection sont des pixels comprenant, en tant que capteur, un photodétecteur.

D'autres caractéristiques, détails et avantages de l'invention ressortiront à la lecture de la description faite en référence aux dessins annexés donnés à titre d'exemple, dans lesquelles:

-    La figure 1 est une vue d'ensemble d'un capteur d'images selon un mode de réalisation de l'invention ;
-    La figure 2a est un schéma fonctionnel d'un pixel du capteur de la figure 1 ;
-    Les figures 2b, 2c et 2d sont des schémas logiques illustrant des réalisations possibles de certains blocs du schéma de la figure 2a;
-    La figure 3 est un logigramme illustrant le fonctionnement du pixel de la figure 2a ;
-    Les figures 4a - 4d et 5a - 5e illustrent la gestion des conflits d'accès au bus selon un mode de réalisation de l'invention ;
-    Les figures 6a - 6d et 7a - 7e illustrent un mécanisme de mutualisation de l'information spatiale selon un mode de réalisation de l'invention ;
-    Les figures 8a et 8b illustrent schématiquement deux modes de réalisation alternatifs du capteur d'image de

EP 3 386 191 B1

l'invention ; et

- Les figures 9a - 9d permettent d'apprécier la qualité des images acquises par des capteurs selon différents modes de réalisation de l'invention.

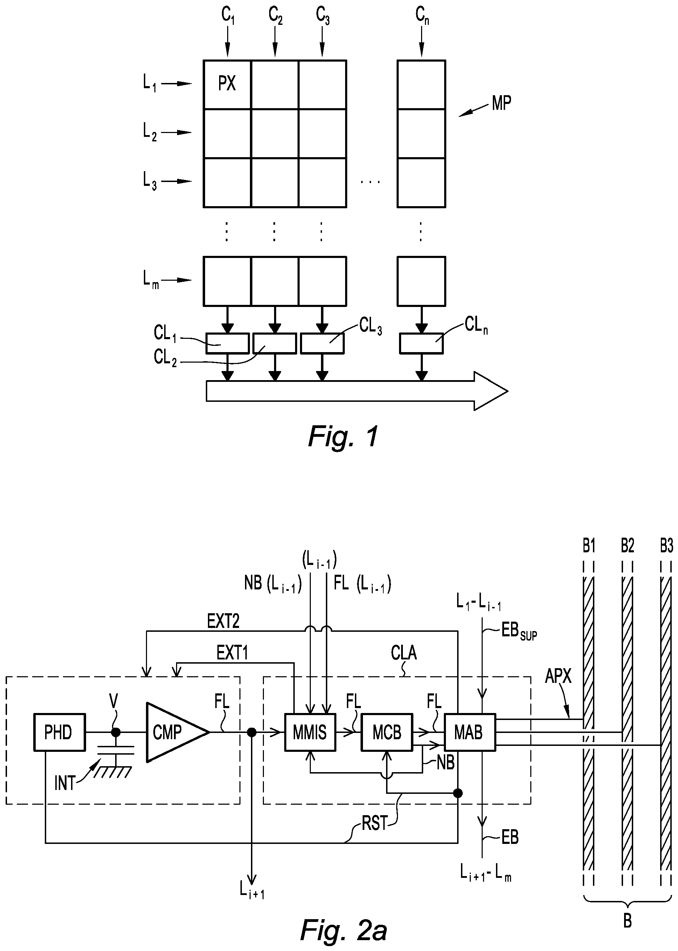

La figure 1 représente schématiquement un capteur d'images selon un mode de réalisation de l'invention. Ce capteur comprend une matrice MP de pixels PX agencés par lignes - $L_1$, $L_2$, $L_3$ ... $L_m$ - et pas colonnes $C_1$, $C_2$, $C_3$ ... $C_m$. Les pixels de chaque colonne sont reliés à un même circuit de lecture $CL_1$, $CL_2$, $CL_3$ ... $CL_n$ par l'intermédiaire d'un bus respectif (non représenté). Conformément au principe de l'imagerie par codage temporel, chaque pixel envoie un signal de déclenchement sur le bus de sa colonne dès que sa charge photo-générée a atteint un seuil. Le signal de déclenchement permet d'identifier le pixel, en d'autres termes il représente son « adresse » dans la colonne. L'instant de réception d'un signal de déclenchement par un circuit de lecture renseigne sur l'intensité d'éclairage du pixel correspondant. Les informations collectées par les différents circuits de lecture sont collectées pour permettre la reconstruction d'une image.

L'invention se différencie de l'art antérieur principalement par la technique de résolution des conflits d'accès au bus qu'elle met en oeuvre.

Selon un mode de réalisation particulier de l'invention, tous les pixels sont réinitialisés simultanément, à des intervalles réguliers correspondant à une « période de trame » prédéfinie. En variante, l'instant de réinitialisation peut varier en fonction de la colonne.

Bien que cela soit généralement le cas, il n'est pas essentiel que les pixels PX de la matrice MP soient effectivement agencés selon un motif rectangulaire. Ce qui est nécessaire est que l'on puisse identifier des « colonnes », c'est-à-dire des séries ordonnées de pixels reliés à un même circuit de lecture par l'intermédiaire d'un bus.

La figure 2a est un schéma fonctionnel d'un pixel PX de la matrice MP de la figure 1. Plus particulièrement on considère un pixel appartenant à la i-ème ligne, avec « i » compris entre 2 et m-1 (autrement dit, il ne s'agit ni de la première ni de la dernière colonne).

De manière conventionnelle, le pixel comprend un photodétecteur PHD (typiquement une photodiode, par exemple de type « pinned »), une capacité INT d'intégration de charge, un comparateur CMP et un circuit logique d'accès au bus CLA, connecté à un bus B. Dans le mode de réalisation de la figure 2a, le bus B est constitué d'une pluralité (par exemple, trois) de bus élémentaires B1, B2, B3, comprenant chacun une pluralité de lignes conductrices.

L'ensemble photodétecteur - capacité d'intégration - comparateur est tout à fait conventionnel. Le photodétecteur PHD, lorsqu'il est éclairé, génère des charges qui sont intégrées par la capacité INT, faisant varier la tension V à ses bornes. Généralement, le photodétecteur PHD génère un courant I qui décharge la capacité INT, dont la tension d'initialisation vaut $V_{RST}$. A un instant t après l'initialisation, la tension V vaut donc :

$$V(t) = V_{RST} - \frac{I}{C}t \qquad (1)$$

C étant la valeur de la capacité INT.

La tension V est appliquée à une entrée d'un comparateur CMP, et une tension de seuil $V_{TH}$ est appliquée à une autre entrée (non représentée). Lorsque V atteint le seuil $V_{TH}$, le comparateur génère un signal (binaire) de déclenchement FL, qui est fourni en entrée au circuit logique d'accès au bus CLA. Ce dernier a quatre fonctions principales :

- Transmettre sur le bus B un signal APX, constitué de plusieurs bits, représentatif de l'adresse du pixel au sein de la colonne (autrement dit, de son rang « i »), pour informer le circuit de lecture de la colonne qu'un déclenchement s'est produit ;
- Gérer les conflits d'accès au bus entre pixels de la colonne ; pour ce faire, il reçoit un signal binaire du bloc de pixels de la colonne appartenant à des lignes de rang inférieur (« pixels précédents »), $L_1$-$L_{i-1}$ et envoie un signal binaire du bloc de pixels de la colonne appartenant à des lignes de rang supérieur (« pixels suivants »), $L_{i+1}$-$L_m$.
- Provoquer l'extinction (signaux binaires EXT1, EXT2) du photodétecteur et du comparateur du pixel lorsque la transmission du signal APX a été effectuée correctement ou, comme cela sera expliqué plus loin, lorsque les informations n'ont pas besoin d'être transmises (ces éléments sont ensuite réactivés au début de la période de trame suivante) ;
- provoquer la réinitialisation (signal binaire RST) du photodétecteur et de l'intégrateur de charge en cas de conflit d'accès au bus empêchant la transmission du signal APX.

Optionnellement, circuit logique d'accès au bus CLA peut également provoquer l'extinction du photodétecteur et du comparateur du pixel afin de mutualiser l'information spatiale de l'image ; pour ce faire, il échange des signaux avec ses plus proches voisins : il reçoit un signal du pixel de la colonne appartenant à la ligne $L_{i-1}$ de rang immédiatement inférieur et il transmet un signal au pixel de la colonne appartenant à la ligne $L_{i+1}$ de rang immédiatement supérieur. Ce

4

mécanisme sera décrit plus loin.

Quand il reçoit un signal de déclenchement, après un temps T à compter de la réinitialisation, le circuit logique d'accès au bus CLA cherche à transmettre sur le premier bus élémentaire, B1, le signal APX. Si le bus élémentaire B1, ou tout autre bus élémentaire du bus B, est déjà occupé par un pixel de rang inférieur, le circuit CLA renonce à la transmission et envoie un signal de réinitialisation RST au photodétecteur PHD et à l'intégrateur INT. En d'autres termes, les pixels ont un niveau de priorité d'autant plus élevé que leur rang est bas (l'inverse est également possible). Après un temps T, le comparateur génère à nouveau le signal de déclenchement, et le circuit CLA effectue un nouvel accès au bus. Cette fois, cependant, l'accès se fait sur le bus élémentaire B2. En cas de nouvel échec, un troisième et dernier accès est effectué, après réinitialisation, sur le bus élémentaire de rang le plus élevé, B3 (bien entendu, le nombre de bus élémentaires, et donc d'essais, peut être différent et en particulier plus élevé). En cas de conflit sur ce bus élémentaire de rang le plus élevé, avec un pixel de niveau de priorité supérieur, il n'y a plus de réinitialisation : simplement, le circuit CLA maintient sa requête jusqu'à ce que le bus ne soit libre. Pour déterminer le niveau d'intensité lumineuse IL au niveau du pixel, le circuit de lecture (ou un processeur traitant les données fournies par le circuit de lecture) prend en compte à la fois l'instant de réception du signal APX et le nombre de réinitialisations effectuées, ce nombre étant exprimé par le rang du bus élémentaire utilisé. Plus précisément, l'intensité lumineuse IL est proportionnelle à l'intensité du photocourant I, qui est donnée par :

$$I = \frac{C(V_{RST} - V_{TH})}{T_R} N \qquad (2)$$

où C est la valeur de la capacité d'intégration, $V_{RST}$ sa tension de réinitialisation, $T_R$ l'instant de réception du signal APX par le circuit de lecture, N le numéro du bus élémentaire utilisé (N=1 pour B1, N=2 pour B2, N=3 pour B3).

Une erreur est introduite uniquement si le circuit CLA doit attendre la libération du dernier bus élémentaire (B3).

Le pixel de rang 1 se différencie de celui de la figure 2a seulement en ce qu'il ne reçoit pas de signaux de la part des pixels de rang inférieur, car ces pixels n'existent pas. De même, le pixel de rang m ne transmet pas de signaux à des pixels de rang supérieur.

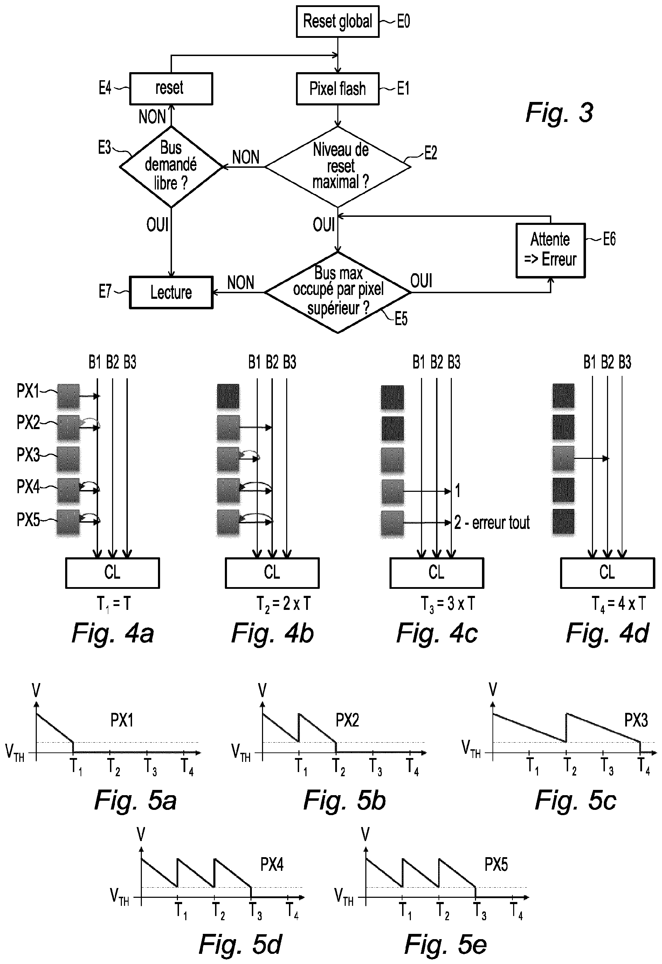

Avant de décrire plus en détail la structure du circuit logique d'accès au bus CLA, il convient d'exposer son fonctionnement à l'aide des figures 3, 4a - 4d, 5a - 5e, 6a - 6d, 7a - 7e.

Le logigramme de la figure 3 illustre le principe de fonctionnement d'un pixel PX.

L'étape E0 correspond à la réinitialisation globale de la matrice. Comme cela a été expliqué plus haut, suite à cette réinitialisation, le pixel PX (comme tous les autres pixels de la matrice) commence à intégrer les charges photogénérées par son photodétecteur. La tension V aux bornes de sa capacité d'intégration varie (diminue, en général) linéairement, jusqu'à atteindre la valeur de seuil $V_{TH}$ à un instant T. A ce point, le comparateur CMP génère le signal de déclenchement FL (étape E1). Le circuit logique CLA vérifie alors si le nombre de réinitialisations maximales (2 dans l'exemple de la figure 2a) a été atteint (E2). Dans l'affirmative, il vérifie si le bus élémentaire de rang maximal, B3, est libre (E5), c'est-à-dire s'il n'est pas occupé par un pixel de niveau de priorité plus élevé. Si c'est le cas, il utilise ce bus élémentaire pour transmettre le signal APX (son adresse) au circuit de lecture (E7), autrement il se met en attente (E6). Si, par contre, le nombre de réinitialisations maximales n'a pas été atteint, le circuit logique vérifie si le bus élémentaire correspondant au nombre de réinitialisations déjà effectuées (B1 si aucune réinitialisation n'a eu lieu, B2 s'il y en a eue une) est libre (E3). Si le bus élémentaire choisi est libre, il est utilisé pour transmettre le signal APX au circuit de lecture (E7), et le pixel s'éteint. Autrement, le pixel est réinitialisé et une nouvelle étape d'intégration de charges commence.

Les figures 4a - 4d et 5a - 5e illustrent ce fonctionnement par un exemple.

On considère une colonne constituée de 5 pixels PX1 - PX5, un bus formé de trois bus élémentaires B1, B2 et B3, et un circuit de lecture CL. Les pixels PX1, PX2, PX4 et PX5 sont exposés à une même intensité lumineuse, et le pixel PX3 à une intensité plus faible d'un facteur 2. Les figures 5a, 5b, 5c, 5d et 5e sont des graphiques de la tension V aux bornes de l'intégrateur des pixels PX1, PX2, PX3, PX4 et PX5, respectivement, en fonction du temps.

A l'instant $T_1$=T (figure 4a), les pixels PX1, PX2, PX4 et PX5 cherchent à accéder simultanément au bus, et plus précisément au bus élémentaire B1. Le pixel de niveau de priorité le plus élevé, PX1, parvient à transmettre son adresse sur le bus, puis s'éteint. Par contre, les pixels PX2, PX4 et PX5 doivent renoncer à la transmission et se réinitialiser. Pendant ce temps, la capacité d'intégration du pixel PX3 se décharge plus lentement puisque le photodétecteur qui lui est associé reçoit une intensité lumineuse plus faible.

A l'instant $T_2$=2*T (figure 4b), les pixels PX2, PX4 et PX5 cherchent à nouveau à accéder au bus, mais cette fois-ci la tentative d'accès concerne le bus élémentaire B2, car ces pixels ont déjà été réinitialisés une fois au cours de la période de trame courante. Simultanément, le pixel PX3 cherche à accéder au bus élémentaire B1. Le pixel PX1 est éteint, et n'intervient plus. Comme dans le cas précédent, seul le pixel de niveau de priorité le plus élevé parmi ceux qui essaient d'effectuer un accès parvient à transmettre son adresse au circuit de lecture : il s'agit du pixel PX2 qui, après avoir effectué la transmission, s'éteint. Les pixels PX3, PX4 et PX5 se réinitialisent et recommencent à intégrer les charges photogénérées.

A l'instant $T_3 = 3*T$ (figure 4c), les pixels PX4 et PX5 déclenchent pour la troisième fois, et essaient simultanément d'accéder au troisième bus élémentaire B3. Comme il s'agit du dernier bus élémentaire disponible, il n'y a plus de réinitialisation : le pixel de niveau de priorité le plus élevé - PX4 - transmet son adresse le premier, tandis que PX5 le fait juste après, à un instant $3T+T_{err}$. Après avoir transmis leur adresse, ces pixels s'éteignent. On comprend, que l'estimation de l'intensité lumineuse du pixel PX5 est légèrement faussée par le délai supplémentaire $T_{err}$.

Enfin, à l'instant $T_4 = 4*T$ (figure 4d), le pixel PX3 transmets son adresse APX sur le bus élémentaire B2.

Comme cela a été évoqué plus haut, il est possible et avantageux de mettre également en oeuvre un mécanisme de mutualisation de l'information spatiale. Le plus souvent, au sein d'une image, la luminosité varie peu entre pixels proches. Il est donc très fréquent que plusieurs pixels adjacents cherchent à accéder au bus en même temps. Cela induit de nombreuses collisions, qui sont consommatrices d'énergie peuvent même dégrader la qualité de l'image reconstituée en induisant des erreurs d'estimation de l'intensité lumineuse, comme expliqué plus haut à propos du pixel PX5. Conformément à ce mécanisme optionnel, lorsque deux pixels adjacents cherchent à accéder en même temps à un même bus élémentaire, le pixel de niveau de priorité le plus faible ne se réinitialise pas, mais s'éteint. Il n'envoie donc jamais son adresse au circuit de lecture. Cela n'entraine cependant pas de perte d'information, car lors de la reconstruction de l'image les pixels n'ayant pas envoyé leur adresse se voient attribuée une même intensité lumineuse que leur plus proche voisin de niveau de priorité supérieur.

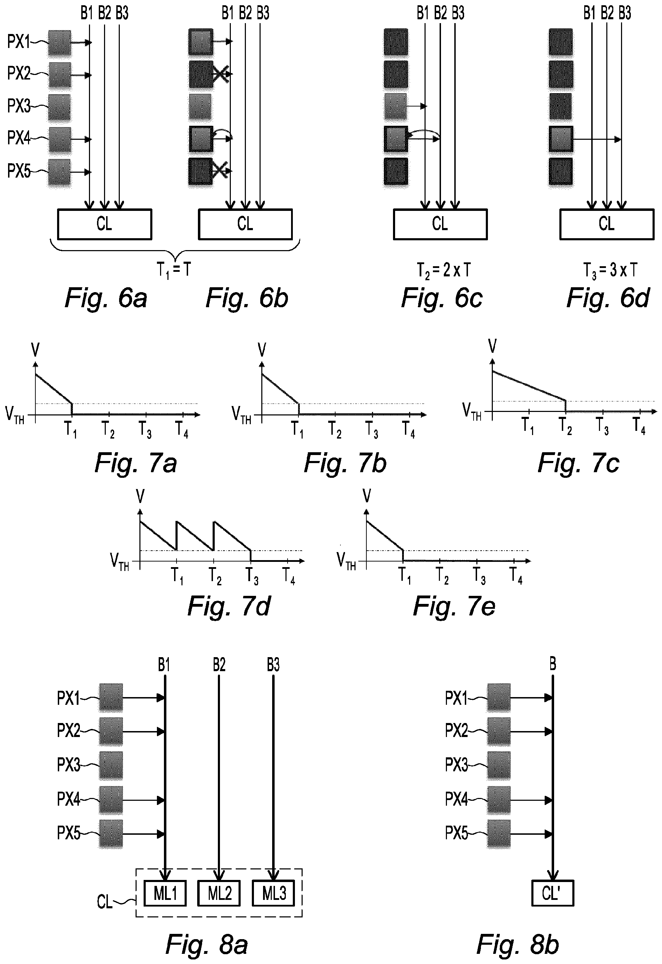

Les figures 6a - 6d et 7a - 7e illustrent ce fonctionnement par un exemple. Comme dans le cas des figures 4a - 4d et 5a - 5e, on considère une colonne constituée de 5 pixels PX1 - PX5, un bus formé de trois bus élémentaires B1, B2 et B3, et un circuit de lecture CL. Les pixels PX1, PX2, PX4 et PX5 sont exposés à une même intensité lumineuse, et le pixel PX3 à une intensité plus faible d'un facteur 2. Les figures 7a, 7b, 7c, 7d et 7e sont des graphiques de la tension V aux bornes de l'intégrateur des pixels PX1, PX2, PX3, PX4 et PX5, respectivement, en fonction du temps.

A l'instant $T_1 = T$ (figures 6a et 6b), les pixels PX1, PX2, PX4 et PX5 cherchent à accéder simultanément au bus, et plus précisément au bus élémentaire B1. Le pixel de niveau de priorité le plus élevé, PX1, parvient à transmettre son adresse sur le bus et s'éteint. Le mécanisme de mutualisation de l'information spatiale entraine également l'extinction de PX2 et PX5, à cause des collisions avec PX1 et PX4, respectivement. Le pixel PX4, lui, est réinitialisé.

A l'instant $T_2 = 2*T$, le pixel PX3 accède au bus élémentaire B1 et PX4 cherche à accéder au bus élémentaire B2. Le conflit est résolu au bénéfice de PX3, dont le niveau de priorité est plus élevé, tandis que PX4 est réinitialisé. Bien que le conflit d'accès se soit produit entre plus proches voisins, le mécanisme de mutualisation de l'information spatiale n'intervient pas (et donc PX4 n'est pas éteint) parce que les bus élémentaires concernés sont différents.

Enfin, à l'instant $T_3 = 3*T$, le pixel PX4 transmets son adresse APX sur le bus élémentaire B3.

Les figures 7a, 7b, 7c, 7d et 7e sont des graphiques de la tension V aux bornes de l'intégrateur des pixels PX1, PX2, PX3, PX4 et PX5, respectivement, en fonction du temps.

On peut remarquer que le nombre de tentative d'accès au bus a été réduit de 7 à 11 et que la plupart des pixels ont été éteint plus précocement que dans le cas précédent (figures 4a - 5e). Le gain en termes de consommation énergétique est tout à fait considérable. En outre, aucune adresse de pixel n'a été transmise en retard, il n'y a donc pas eu d'erreur d'estimation de l'intensité.

Plus le temps mis par un pixel pour transmettre son adresse sur le bus est élevé, plus le nombre de collisions sera élevé, et donc plus de pixels seront éteints par le mécanisme de mutualisation de l'information spatiale, réduisant la consommation. Cependant, si ce temps est relativement important, des pixels éclairés par des niveaux d'intensité proches mais distincts seront susceptibles d'entrer en collisions, et donc de se voir attribuer un niveau d'intensité identique, ce qui se traduit par un bruit.

En revenant au schéma fonctionnel de la figure 2a, on peut remarquer que le circuit logique d'accès au bus CLA comprend trois blocs fonctionnels : un module de mutualisation de l'information spatiale MMIS, un module de choix du bus élémentaire MCB et un module d'accès au bus, MAB.

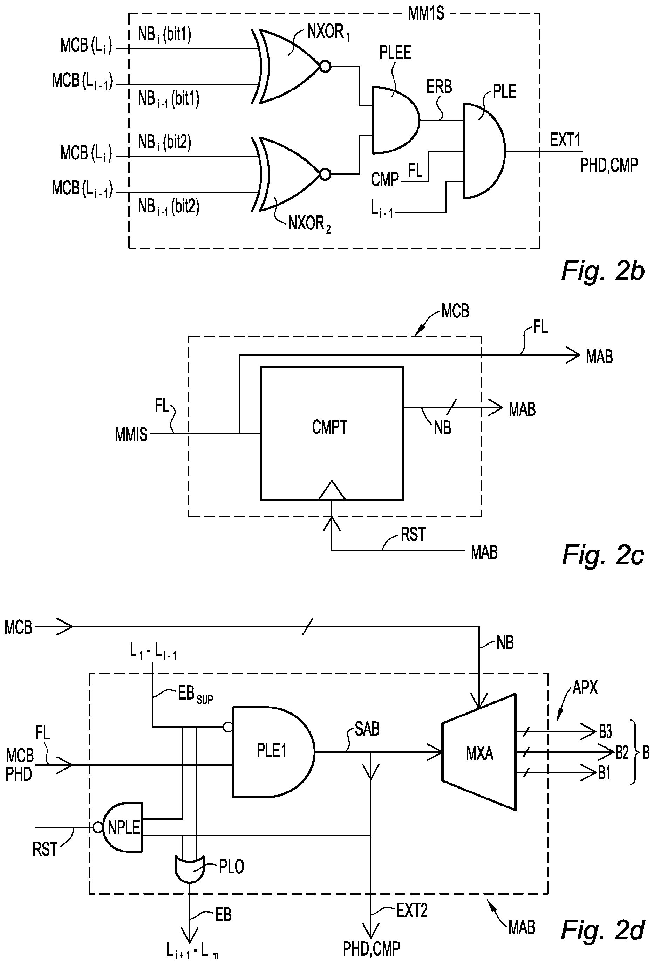

Comme illustré par la figure 2b, le module de mutualisation de l'information spatiale MMIS comprend une entrée pour le signal de déclenchement du plus proche voisin de rang inférieur, $L_{i-1}$, et une entrée pour le signal de déclenchement du pixel, FL. En cas de réception simultanée des deux signaux, le module génère le signal EXT1 qui déclenche l'extinction du photodétecteur PHD et du comparateur CMP. En outre, le signal FL est transmis au module équivalent du pixel de rang supérieur, $L_{i+1}$, et au module de choix du bus, MCB. Comme illustré sur la figure 2b, ce module peut être basé sur une porte logique « ET » à trois entrées, PLE. Les signaux sur les trois entrées de la porte PLE sont le signal de déclenchement FL du pixel, le signal de déclenchement du pixel de rang supérieur $FL(L_{i+1})$ et un signal ERB représentatif d'une égalité bit à bit entre le signal NB généré par le module MCB, représentatif du numéro de bus choisi (voir ci-après), et le signal NB du pixel de rang inférieur, $L_{i-1}$. Pour générer le signal ERB les bits $NB_i(bit1)$, $NB_{i-1}(bit1)$, $NB_i(bit2)$, $NB_{i-1}(bit2)$ des numéros de bus sont comparés deux à deux à l'aide de portes NON-OR EXCLUSIF NXOR1, NXOR2 dont les sorties sont fournies à une porte « ET » PLEE. La figure 2b se rapport au cas où les numéros de bus sont représentés par deux bits (ce qui permet d'utiliser tout au plus quatre bus), mais une généralisation ne pose aucune difficulté.

Le module de choix du bus MCB (figure 2c) est simplement constitué par un compteur CMPT qui est incrémenté à chaque fois qu'il reçoit le signal de déclenchement FL provenant du comparateur CMP via le module MMIS. Son signal de sortie NB, transmis au module d'accès MAB, correspond à la valeur du comptage et désigne le bus élémentaire choisi. Il s'agit d'un signal à plusieurs bits - 2 dans le mode de réalisation considéré ici, où les trois bus élémentaires B1, B2 et B3 peuvent être désignés par 00, 01 et 10. Le signal de déclenchement FL est également transmis au module d'accès MAB. Le compteur CMPT est incrémenté par le signal de réinitialisation du pixel, RST, généré par le module MAB.

Le module d'accès au bus MAB (figure 2d) est légèrement plus complexe. Il présente trois entrées pour : le signal de déclenchement FL provenant du comparateur CMP via les modules MMIS et MCB ; un signal binaire $EB_{SUP}$ provenant du bloc de pixels de la colonne appartenant à des lignes de rang inférieur $L_1$-$L_{i-1}$ ; et le signal NB généré par le module de choix du bus MCB ; et quatre sorties pour : un signal d'extinction EXT2 du photodétecteur PHD et du comparateur CMP ; un signal de réinitialisation RST du photodétecteur PHD et de la capacité d'intégration INT, un signal EB représentatif de l'état du bus, qui est transmis au bloc de pixels de la colonne appartenant à des lignes de rang supérieur $L_{i+1}$-$L_m$ (et constitue, pour ce dernier, le signal $EB_{SUP}$); et le signal APX indicatif de l'adresse du pixel.

Le complément du signal $EB_{SUP}$ et le signal de déclenchement FL sont appliqués aux entrées d'une porte logique « ET » PLE1. Le signal SAB en sortie de cette porte logique prend une valeur logique « 1 » si est seulement si FL=1 (c'est-à-dire, si le signal de déclenchement est présent et le pixel doit donc essayer d'accéder au bus) et $EB_{SUP}$=0 (c'est-à-dire qu'aucun pixel de niveau de priorité supérieur n'a préempté le bus) ; ce signal confirme qu'un accès au bus peut effectivement avoir lieu. Le signal SAB est fourni à une entrée, dite d'activation, du multiplexeur d'adresse MXA, qui reçoit également, sur une autre entrée dite de sélection, le signal NB. Le multiplexeur d'adresse NB a une pluralité de sorties à M bits, reliées à des bus élémentaires respectifs (B1, B2, B3). Le nombre M de bits doit être suffisant pour identifier tous les pixels d'une colonne ; typiquement M=$\lceil log_2(m)\rceil$, où m est le nombre de lignes de la matrice et $\lceil\ \rceil$ désigne la fonction plafond. Lorsqu'il reçoit le signal SAB sur son entrée d'activation le multiplexeur d'accès fournit, sur la sortie déterminée par le signal NB présent sur son entrée de sélection, le signal à M bits APX, qui identifie de manière univoque le pixel à l'intérieur de la colonne.

Un élément introduisant un délai peut être ajouté sur l'entrée du signal FL dans le module MAB afin d'assurer une bonne temporisation du circuit.

Le signal SAB est également fourni :

- A une entrée d'une porte logique « NON - ET » PLE2, qui reçoit sur son autre entrée le signal de déclenchement FL. Le signal de sortie de cette porte logique est le signal RST qui commande la réinitialisation du photodétecteur PHD et l'incrémentation du compteur CMPT.
- A une entrée d'une porte logique « OU » PLO, dont la sortie est le signal RST (occupation du bus) qui constitue le signal $RST_{SUP}$ pour le pixel de rang supérieur.

Par ailleurs, le signal SAB est prélevé d'une sortie du module MAB pour constituer le signal EXT2 qui, tout comme EXT1, commande l'extinction du photodétecteur PHD et du comparateur CMP.

Le circuit de lecture reçoit les signaux d'adresse APX, leur applique un horodatage et transmet l'ensemble (adresse ; bus sur lequel l'adresse a été reçue ; horodatage) à un processeur qui procède à la reconstruction de l'image. En variante, le circuit de lecture peut directement procéder au calcul de l'intensité lumineuse associée à chaque pixel (équation 2) et transmettre la valeur calculée au processeur. La réalisation d'un tel circuit ne pose pas de difficulté particulière à l'homme du métier, expert en électronique numérique.

L'invention a été décrite en référence à un mode de réalisation particulier, mais diverses variantes peuvent être envisagées. Par exemple :

- Comme représenté sur la figure 8a, le circuit de lecture CL peut comprendre plusieurs modules de lecture indépendants, ML1, ML2, ML3, un pour chaque bus élémentaire. L'avantage de cette approche est que des signaux d'adresse APX transmis par différents pixels sur différents bus élémentaires peuvent être lus indépendamment les uns des autres, sans que cela ne conduise à une collision. Par contre, la complexité du circuit de lecture et sa consommation énergétique sont démultipliés.
- De préférence, chaque bus élémentaire comprend M conducteurs individuels de manière à permettre la transmission parallèle des M bits du signal d'adresse APX. Une transmission série de l'adresse sur un seul conducteur est envisageable, mais cela nécessite un module d'accès au bus beaucoup plus complexe et entraine un temps de transmission plus élevé, et donc une probabilité de collision accrue.
- Au lieu d'utiliser un bus constitué d'une pluralité de bus élémentaires, il est possible d'utiliser un bus unique et de transmettre au circuit de lecture aussi bien le signal d'adresse APX qu'un signal numérique indicatif du nombre de réinitialisations. Cela est illustré sur la figure 8b où le circuit de lecture est désigné par la référence CL'. Cependant, l'utilisation de plusieurs bus élémentaires en parallèle est préférée, en particulier en cas de réalisation en technologie CMOS avancée, qui permet une densité d'interconnexion importante.

- Dans le mode de réalisation décrit, un signal de déclenchement est généré lorsque la tension de pixel V franchit un seuil. D'une manière connue en soi, d'autres types d'événements au niveau du pixel peuvent être utilisés pour générer un signal de déclenchement.

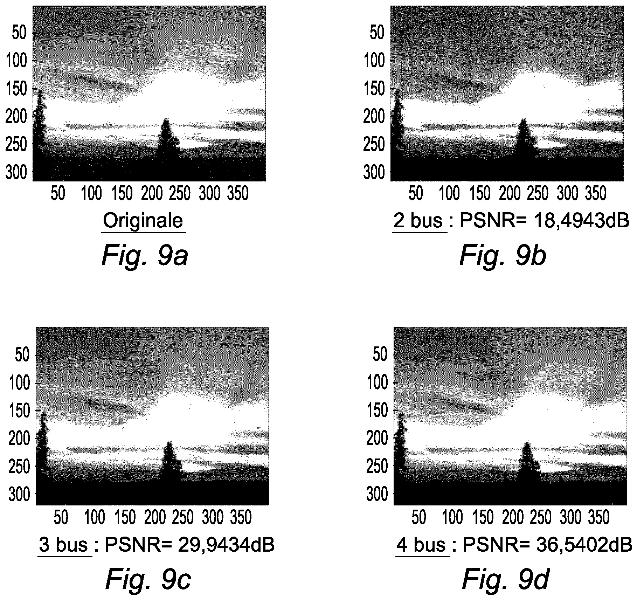

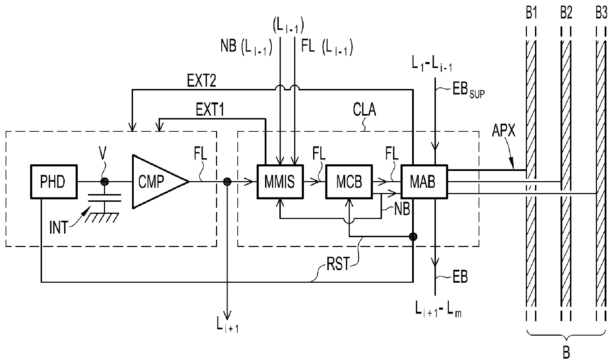

Le nombre de bus élémentaires, ou plus généralement le nombre de réinitialisations possibles dans chaque trame, est l'un des paramètres de conception les plus importants d'un capteur d'image selon l'invention. Plus ce nombre est élevé, plus faible sera la probabilité que le temps d'acquisition d'un signal d'adresse soit faussé par des collisions répétées (cas du pixel PX5 dans les figures 4a - 5e). Cependant, le nombre de réinitialisations possibles est contraint par la cadence d'acquisition de trame ; en outre, la multiplication des bus élémentaires augmente la complexité du circuit. On trouve cependant qu'en pratique le nombre de bus élémentaires peut être limité à quelques unités tout en assurant une qualité d'image satisfaisante. Cela est illustré à l'aide des figures 9a - 9d.

La figure 9a est une image de référence, acquise au moyen d'un capteur CMOS à pixels actifs.

La figure 9b a été obtenue grâce à une simulation d'un capteur selon l'invention comprenant deux bus élémentaires, et donc une seule réinitialisation possible pour chaque pixel. Manifestement, la qualité de cette image est peu satisfaisante. Elle peut être quantifiée par son PSNR (écart signal à bruit de pic), défini par :

$$PSNR = 10 \cdot log_{10}\left(\frac{d^2}{EQM}\right)$$

où d est la dynamique du signal (pour un signal codé sur nb bits, $d=2^{nb}$) et EQM et l'erreur quadratique moyenne des pixels de l'image considérée par rapport aux pixels correspondants de l'image de référence (fig. 9a). Dans le cas de la figure 9b, PSNR=28,4943 dB.

En passant à 3 bus élémentaires (figure 9c), le PSNR augmente de plus de 10 décibels, à PNSR=29,9434.

Le passage à 4 bus élémentaires (figure 9d) augmente encore les PSNR, jusqu'à une valeur de 36,5402 ce qui est très satisfaisant.

Il est possible de mettre en oeuvre une stratégie de « réveil graduel », dans laquelle le nombre de bus élémentaires utilisés est adapté de manière dynamique (dans la limite d'un maximum imposé par le nombre de conducteurs disponibles) en fonction de la qualité mesurée de l'image et d'un niveau de qualité requis.

Dans le mode de réalisation décrit ci-dessus, le niveau de priorité d'un pixel est entièrement prédéterminé et plus précisément dépend uniquement de son rang à l'intérieur de la colonne ; on peut parler d'une priorité « intrinsèque ». Selon un autre mode de réalisation de l'invention, la priorité dépend principalement du bus élémentaire sur lequel le pixel entend transmettre son adresse (et donc du nombre de tentatives de transmission déjà effectuées). On peut parler d'une priorité « extrinsèque ». Concrètement, en faisant référence à l'architecture de la figure 2a, les pixels qui entendent transmettre sur le bus élémentaire B3 sont prioritaires par rapport à ceux qui entendent transmettre sur les bus élémentaires B2 et B1, et ceux qui entendent transmettre sur B2 sont prioritaires par rapport à ceux qui entendent transmettre sur B1. Les conflits parmi les pixels de même priorité extrinsèque (c'est-à-dire qui entendent transmettre sur un même bus) sont résolus par la prise en compte de la priorité intrinsèque (c'est-à-dire de leur rang). Ce mode de réalisation nécessite un circuit logique d'accès plus complexe, dont la réalisation ne pose cependant pas de difficulté particulière pour l'homme du métier.

L'invention a été décrite en référence au cas d'un capteur d'images comprenant une matrice de pixels comprenant chacun un photodétecteur. Elle s'applique plus généralement à toute sorte de capteur matriciel comprenant un arrangement d'éléments de détections comprenant chacun un capteur élémentaire configuré pour générer un courant électrique dont l'intensité est représentative de (par exemple, proportionnelle à) une grandeur physique à détecter. Il peut s'agir, par exemple, de capteurs thermiques, chimiques, de pression, etc.

## Revendications

1. Capteur matriciel comprenant une matrice (MP) d'éléments de détection (PX, $PX_i$) agencés par lignes ($L_1$ - $L_m$) et par colonnes ($C_1$ - $C_n$) et un circuit de lecture (CL ; CL' ; $CL_1$ - $CL_n$) pour chaque colonne, les éléments de détection d'une même colonne étant reliés au circuit de lecture correspondant par l'intermédiaire d'un bus (B), chaque élément de détection comprenant un capteur (PHD) adapté pour générer un courant électrique ayant une intensité représentative d'une grandeur physique à détecter, un intégrateur de charge (INT) configuré pour accumuler des charges générées par ledit capteur, un comparateur (CMP) configuré pour générer un signal de déclenchement (FL) lorsqu'un niveau de tension (V) aux bornes de ce dernier atteint un niveau de seuil ($V_{TH}$), ainsi qu'un circuit logique d'accès au bus (CLA) configuré pour recevoir en entrée ledit signal de déclenchement et, suite à la réception dudit signal, essayer de transmettre sur ledit bus une adresse (APX) dudit élément de détection dans la colonne, **caractérisé en ce que** les éléments de détection d'une même colonne ont des niveaux de priorité d'accès au bus différents, et **en ce que** ledit circuit logique d'accès au bus de chaque élément de détection est configuré pour : renoncer à transmettre ladite adresse et provoquer une réinitialisation de l'intégrateur de charge de l'élément de détection si le bus est préempté par un élément de détection de niveau de priorité supérieur ; compter le nombre d'essais effectués avant de pouvoir transmettre ladite adresse ; et communiquer ledit nombre audit circuit de lecture avec ladite adresse de l'élément de détection.

2. Capteur matriciel selon la revendication 1 dans lequel ledit bus comprend une pluralité de bus élémentaires (B1 - B3), le circuit logique d'accès au bus de chaque élément de détection étant configuré pour transmettre ladite adresse (APX) sur un bus élémentaire choisi en fonction du nombre d'essais qu'il a effectués avant de pouvoir transmettre l'adresse de l'élément de détection.

3. Capteur matriciel selon la revendication 2 dans lequel chaque circuit logique d'accès au bus est configuré pour renoncer à transmettre l'adresse de l'élément de détection dès lors qu'un bus élémentaire dudit bus est préempté par un élément de détection de niveau de priorité supérieur.

4. Capteur matriciel selon la revendication 2 dans lequel chaque dit circuit de lecture (CL) comprend une pluralité de modules de lecture (ML1, ML2, ML3) associés à des bus élémentaires respectifs (B1, B2, B3) et dans lequel chaque circuit logique d'accès au bus est configuré pour renoncer à transmettre l'adresse de l'élément de détection lorsque le bus élémentaire sur lequel il essaie d'effectuer la transmission est préempté par un élément de détection de niveau de priorité supérieur, et pour effectuer la transmission dans le cas contraire.

5. Capteur matriciel selon l'une des revendications précédentes dans lequel chaque circuit logique d'accès au bus est configuré pour attendre que le bus soit disponible après avoir effectué un nombre maximal prédéterminé d'essais de transmission.

6. Capteur matriciel selon l'une des revendications précédentes dans lequel ledit circuit de lecture est configuré pour déterminer un niveau d'intensité lumineuse reçu par un élément de détection ayant transmis son adresse à partir de l'instant auquel ladite adresse a été transmise et du nombre d'essais de transmission effectués.

7. Capteur matriciel selon l'une des revendications précédentes dans lequel chaque circuit logique d'accès au bus est configuré pour commander l'extinction du capteur et du comparateur de l'élément de détection après avoir transmis son adresse, et pour commander sa réactivation à la fin d'une période de trame.

8. Capteur matriciel selon l'une des revendications précédentes dans lequel chaque circuit logique d'accès au bus est configuré pour commander l'extinction du capteur et du comparateur de l'élément de détection après avoir effectué un essai de transmission de l'adresse dudit élément de détection en même temps, et après un même nombre d'essais, que l'élément de détection de niveau de priorité immédiatement supérieur.

9. Capteur matriciel selon l'une des revendications précédentes dans lequel les niveaux de priorité des éléments de détection d'une colonne sont prédéterminés.

10. Capteur matriciel selon la revendication 9 dans lequel les niveaux de priorité des éléments de détection d'une colonne correspondent à leur rang dans ladite colonne.

11. Capteur matriciel selon l'une des revendications 1 à 8 dans lequel les niveaux de priorité des éléments de détection d'une colonne dépendent à la fois de leur rang dans ladite colonne et du nombre d'essais d'accès au bus déjà effectués.

12. Capteur d'images formé par un capteur matriciel selon l'une des revendications précédentes dans lequel lesdits éléments de détection sont des pixels comprenant, en tant que capteur, un photodétecteur.

**Patentansprüche**

1. Matrixsensor, beinhaltend eine Matrix (MP) von Sensorelementen (PX, $PX_I$), welche in Zeilen ($L_1$ - $L_m$) und Spalten ($C_1$ - $C_n$) angeordnet sind und einen Leseschaltkreis (CL; CL'; $CL_1$ - $CL_n$) für jede Spalte, wobei die Sensorelemente einer gleichen Spalte mit dem entsprechenden Leseschaltkreis über einen Bus (B) verbunden sind, wobei jedes Sensorelement einen Sensor (PHD) beinhaltet, welcher geeignet ist, einen elektrischen Strom zu erzeugen, welcher eine Intensität besitzt, welche eine zu erfassende physikalische Größe darstellt, einen Lastintegrator (INT), welcher konfiguriert ist, um von dem Sensor erzeugte Lasten zu speichern, einen Komparator (CMP), welcher konfiguriert ist, um ein Auslösesignal (FL) zu erzeugen, wenn ein Spannungspegel (V) an den Klemmen des Komparators einen Schwellenpegel ($V_{TH}$) erreicht, sowie einen Buszugangs-Logikschaltkreis (CLA), welcher konfiguriert ist, um am Eingang das Auslösesignal zu empfangen, und, nach dem Empfang des Signals, zu versuchen, eine Adresse (APX) des Sensorelementes in der Spalte über den Bus zu übertragen, **dadurch gekennzeichnet, dass** die Sensorelemente einer gleichen Spalte unterschiedliche Buszugangs-Prioritätsstufen besitzen und dadurch, dass der Buszugangs-Logikschaltkreis eines jeden Sensorelementes konfiguriert ist zum: Verzichten auf die Übertragung der Adresse und Bewirken einer Reinitialisierung des Lastintegrators des Sensorelementes, wenn der Bus durch ein Sensorelement mit einer höheren Prioritätsstufe beansprucht wird; Zählen der Anzahl der vorgenommenen Versuche, bevor die Adresse übertragen werden kann; und Kommunizieren der Anzahl an den Leseschaltkreis mit der Adresse des Sensorelementes.

2. Matrixsensor nach Anspruch 1, bei welchem der Bus eine Vielzahl von Elementarbussen (B1 - B3) beinhaltet, wobei der Buszugangs-Logikschaltkreis eines jeden Sensorelementes konfiguriert ist, um die Adresse (APX) über einen Elementarbus zu übertragen, welcher anhand der Anzahl der Versuche gewählt wird, die er vorgenommen hat, bevor er die Adresse des Sensorelementes übertragen konnte.

3. Matrixsensor nach Anspruch 2, bei welchem jeder Buszugangs-Logikschaltkreis konfiguriert ist, um auf die Übertragung der Adresse des Sensorelementes zu verzichten, wenn ein Elementarbus des Busses von einem Sensorelement mit höherer Prioritätsstufe beansprucht wird.

4. Matrixsensor nach Anspruch 2, bei welchem jeder Leseschaltkreis (CL) eine Vielzahl von Lesemodulen (ML1, ML2, ML3) beinhaltet, welche mit jeweiligen Elementarbussen (B1, B2, B3) assoziiert sind, und bei welchem jeder Buszugangs-Logikschaltkreis konfiguriert ist, um auf die Übertragung der Adresse des Sensorelementes zu verzichten, wenn der Elementarbus, über welchen er die Übertragung vorzunehmen versucht, von einem Sensorelement mit höherer Prioritätsstufe beansprucht wird, und um im gegenteiligen Falle die Übertragung vorzunehmen.

5. Matrixsensor nach einem der vorhergehenden Ansprüche, bei welchem jeder Buszugangs-Logikschaltkreis konfiguriert ist, um abzuwarten, bis der Bus verfügbar ist, nachdem er eine vorbestimmte, maximale Anzahl an Übertragungsversuchen vorgenommen hat.

6. Matrixsensor nach einem der vorhergehenden Ansprüche, bei welchem der Leseschaltkreis konfiguriert ist, um eine von einem Sensorelement empfangene Lichtintensitätsstufe zu bestimmen, welches seine Adresse anhand desjenigen Zeitpunktes, an dem die Adresse übertragen wurde und der Anzahl der vorgenommenen Übertragungsversuche übertragen hat.

7. Matrixsensor nach einem der vorhergehenden Ansprüche, bei welchem jeder Buszugangs-Logikschaltkreis konfiguriert ist, um die Abschaltung des Sensors und des Komparators des Sensorelementes zu befehlen, nachdem er seine Adresse übertragen hat, und um seine Reaktivierung am Ende einer Rahmenperiode zu befehlen.

8. Matrixsensor nach einem der vorhergehenden Ansprüche, bei welchem jeder Buszugangs-Logikschaltkreis konfiguriert ist, um die Abschaltung des Sensors und des Komparators des Sensorelementes zu befehlen, nachdem er gleichzeitig einen Übertragungsversuch der Adresse des Sensorelementes vorgenommen hat, und nach einer gleichen Anzahl von Versuchen wie das Sensorelement der nächsthöheren Prioritätsstufe.

9. Matrixsensor nach einem der vorhergehenden Ansprüche, bei welchem die Prioritätsstufen der Sensorelemente einer Spalte vorbestimmt sind.

10. Matrixsensor nach Anspruch 9, bei welchem die Prioritätsstufen der Sensorelemente einer Spalte ihrem Rang in der Spalte entsprechen.

11. Matrixsensor nach einem der Ansprüche 1 bis 8, bei welchem die Prioritätsstufen der Sensorelemente einer Spalte gleichermaßen von ihrem Rang in der Spalte und von der Anzahl der bereits vorgenommenen Buszugangsversuche abhängen.

12. Bildsensor, gebildet aus einem Matrixsensor nach einem der vorhergehenden Ansprüche, bei welchem die Sensorelemente Pixel sind, welche als Sensor einen Photodetektor beinhalten.

**Claims**

1. A matrix-array sensor comprising a matrix (MP) of detection elements (PX, $PX_i$) that are arranged in rows ($L_1$ - $L_m$) and in columns ($C_1$ - $C_n$) and a readout circuit (CL; CL'; $CL_1$ - $CL_n$) for each column, the detection elements of one and the same column being linked to the corresponding readout circuit via a bus (B), each detection element comprising a sensor (PHD) suitable for generating an electric current having an intensity that is representative of a physical quantity to be detected, a charge integrator (INT) configured to accumulate charges generated by said sensor, a comparator (CMP) configured to generate a trigger signal (FL) when a voltage level (V) across the terminals of this latter reaches a threshold level ($V_{TH}$), and a bus access logic circuit (CLA) configured to receive, as input, said trigger signal and, following the reception of said signal, to attempt to transmit, over said bus, an address (APX) of said detection element in the column, **characterized in that** the detection elements of one and the same column have different bus access priority levels, and **in that** said bus access logic circuit of each detection element is configured: to abandon transmission of said address and to provoke a reset of the charge integrator of the detection element if the bus is pre-empted by a detection element having a higher priority level; to count the number of attempts made before being able to transmit said address; and to communicate said number to said readout circuit along with said address of the detection element.

2. The matrix-array sensor as claimed in claim 1, wherein said bus comprises a plurality of elementary buses (B1 - B3), the bus access logic circuit of each detection element being configured to transmit said address (APX) over an elementary bus chosen according to the number of attempts it has made before being able to transmit the address of the detection element.

3. The matrix-array sensor as claimed in claim 2, wherein each bus access logic circuit is configured to abandon transmission of the address of the detection element once an elementary bus of said bus is pre-empted by a detection element having a higher priority level.

4. The matrix-array sensor as claimed in claim 2, wherein each said readout circuit (CL) comprises a plurality of readout modules (ML1, ML2, ML3) that are associated with respective elementary buses (B1, B2, B3) and wherein each bus access logic circuit is configured to abandon transmission of the address of the detection element when the elementary bus over which it is attempting to carry out the transmission is pre-empted by a detection element having a higher priority level, and to carry out the transmission otherwise.

5. The matrix-array sensor as claimed in one of the preceding claims, wherein each bus access logic circuit is configured to wait for the bus to be available after having made a predetermined maximum number of transmission attempts.

6. The matrix-array sensor as claimed in one of the preceding claims, wherein said readout circuit is configured to determine a light intensity level received by a detection element having transmitted its address from the instant in time at which said address was transmitted and the number of transmission attempts made.

7. The matrix-array sensor as claimed in one of the preceding claims, wherein each bus access logic circuit is configured to order the sensor and the comparator of the detection element to turn off after having transmitted its address, and to order them to turn back on again after a frame period.

8. The matrix-array sensor as claimed in one of the preceding claims, wherein each bus access logic circuit is configured to order the sensor and the comparator of the detection element to turn off after having made an attempt to transmit the address of said detection element at the same time, and after one and the same number of attempts, as the detection element having the priority level immediately above it.

9. The matrix-array sensor as claimed in one of the preceding claims, wherein the priority levels of the detection elements of a column are predetermined.

10. The matrix-array sensor as claimed in claim 9, wherein the priority levels of the detection elements of a column correspond to their rank in said column.

11. The matrix-array sensor as claimed in one of claims 1 to 8, wherein the priority levels of the detection elements of a column depend both on their rank in said column and on the number of bus access attempts already made.

12. An image sensor formed by a matrix-array sensor as claimed in one of the preceding claims, wherein said detection elements are pixels comprising, as a sensor, a photodetector.

Fig. 1

Fig. 2a

MM1S

MCB (L$_i$) — NB$_i$ (bit1)
MCB (L$_{i-1}$) — NB$_{i-1}$ (bit1)
NXOR$_1$

MCB (L$_i$) — NB$_i$ (bit2)
MCB (L$_{i-1}$) — NB$_{i-1}$ (bit2)
NXOR$_2$

PLEE
ERB
PLE
CMP  FL
L$_{i-1}$

EXT1
PHD,CMP

*Fig. 2b*

MCB
FL
MAB

FL
MMIS

CMPT

NB
MAB

RST
MAB

*Fig. 2c*

MCB
NB

L$_1$ - L$_{i-1}$
EB$_{SUP}$
APX

FL
MCB
PHD

PLE1
SAB

MXA
B3
B2
B1
} B

RST
NPLE

PLO

EB
L$_{i+1}$ - L$_m$

EXT2
PHD,CMP

MAB

*Fig. 2d*

Fig. 3

Fig. 4a    Fig. 4b    Fig. 4c    Fig. 4d

Fig. 5a    Fig. 5b    Fig. 5c

Fig. 5d    Fig. 5e

Fig. 6a    Fig. 6b    Fig. 6c    Fig. 6d

Fig. 7a    Fig. 7b    Fig. 7c

Fig. 7d    Fig. 7e

Fig. 8a    Fig. 8b

Originale

*Fig. 9a*

2 bus : PSNR= 18,4943dB

*Fig. 9b*

3 bus : PSNR= 29,9434dB

*Fig. 9c*

4 bus : PSNR= 36,5402dB

*Fig. 9d*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005273661 A
- FR 3035759

**Littérature non-brevet citée dans la description**

- **J. A. LEÑERO-BARDALLO ; R. CARMONA-GALÁN ; Á. RODRÍGUEZ-VÁZQUEZ.** A high dynamic range image sensor with linear response based on asynchronous event detection. *European Conférence on Circuit Theory and Design,* 2015
- **Z. KALAYJIAN ; A. G. ANDREOU.** Asynchronous Communication of 2D Motion Information Using Winner-Takes-All Arbitration. *Analog Integrated Circuits and Signal Processing,* 1997, vol. 13, 103-109
- **N. MASSARI ; S. ARSALAN JAWED ; M. GOTTARDI.** A Collision-Free Time-to-First Spike Camera Architecture Based on a Winner-Take-All Network. *18th European Conférence on Circuit Theory and Design,* 2007